# EUROPÄISCHE PATENTSCHRIFT

(11) **EP 3 456 914 B1**
(45) Veröffentlichungstag und Bekanntmachung des Hinweises auf die Patenterteilung: **21.06.2023**
(21) Anmeldenummer: 17191865.9
(22) Anmeldetag: 19.09.2017
(51) Int. Cl.: E21B 7/00, E21B 7/20

(54) **DOPPELKOPF-BOHRVORRICHTUNG UND VERFAHREN ZUM ERSTELLEN EINER BOHRUNG**
DUAL HEAD DRILLING DEVICE AND METHOD FOR PRODUCING A BOREHOLE
DISPOSITIF DE FORAGE DOUBLE TÊTE ET PROCÉDÉ DE RÉALISATION D'UN FORAGE

(43) Veröffentlichungstag der Anmeldung: 20.03.2019
(73) Patentinhaber: Eurodrill GmbH, 57489 Drolshagen (DE)
(72) Erfinder: Pikowski, Andreas, 57489 Drolshagen (DE); Merzhäuser, Markus, 57462 Olpe (DE); Uelhoff, Henrik, 57489 Drolshagen - Herpel (DE)
(74) Vertreter: Wunderlich & Heim Patentanwälte Partnerschaftsgesellschaft mbB

(56) Entgegenhaltungen:
- WO-A1-2011/146490
- WO-A2-2010/101987
- DE-A1-102006 023 505
- DE-A1-102007 012 055
- DE-A1-102015 001 720

## Beschreibung

Die Erfindung betrifft eine Doppelkopf-Bohrvorrichtung für ein Bohrgestänge mit einem Außenrohr und einem zumindest abschnittsweise innerhalb des Außenrohres verlaufenden Innengestänge, mit einer ersten Antriebseinheit zum drehenden Antreiben des Innengestänges und einer zweiten Antriebseinheit zum drehenden Antreiben des Außenrohres, gemäß dem Oberbegriff des Anspruchs 1.

Weiterhin betrifft die Erfindung ein Verfahren zum Erstellen einer Bohrung, bei dem ein Bohrgestänge mit einem Außenrohr und einem zumindest abschnittsweise innerhalb des Außenrohres verlaufenden Innengestänge mittels einer Doppelkopfbohrvorrichtung in Rotation versetzt und axial verfahren wird, gemäß dem Anspruch 11.

Eine weitere Bohrvorrichtung ist aus der DE 10 2006 059 171 B3 bekannt. Diese bekannte Bohrvorrichtung weist einen ersten Antrieb zum Antreiben eines Außenrohres auf. Die erste Antriebseinheit ist dabei ringförmig ausgebildet, wobei ein Innengestänge durch die erste Antriebseinheit hindurchragt bis zu einer zweiten Antriebseinheit, welche das Innengestänge drehend antreibt. Mittels eines Stellzylinders ist die hintere zweite Antriebseinheit gegenüber der vorderen ersten Antriebseinheit axial verfahrbar, so dass das Innengestänge relativ zum Außenrohr axial verstellt werden kann. Die axiale Verstellung ist durch die Hublänge des Stellzylinders begrenzt.

Eine gattungsgemäße Drehantriebsanordnung für ein Bohrgestänge mit einem Außenrohr und einem Innengestänge geht aus der EP 1 936 109 A1 oder der WO 2011/146490 A1 hervor. Bei dieser Drehantriebsanordnung sind eine Drehantriebseinheit für ein Außengestänge und eine Drehantriebseinheit für ein Innengestänge axial fest zueinander angeordnet. Das Innengestänge ragt durch beide Antriebseinheiten hindurch und ist mit dem hinteren Ende in einem abschließenden Lagergehäuse gelagert. Das hintere Lagergehäuse und damit das Innengestänge kann mittels eines Stellzylinders axial verfahren und damit relativ zum Außenrohr verstellt werden. Auch bei dieser Anordnung ist die axiale Verstellmöglichkeit des Innengestänges durch die Hublänge des Stellzylinders begrenzt.

Bei der WO 2011/146490 A1 sind an einem unteren Bereich einer Bohrlafette und damit in Bohrrichtung vor den Drehantrieben Spannklammern angeordnet, welche eine Gestängebrecheinrichtung zum Brechen der Gewindeverbindungen der Gestängeelemente vorsehen.

Aus der EP 2 295 645 B1 ist ein Bohrgerät mit einem Schneckenbohrer bekannt. Der Schneckenbohrer ist an einer Verlängerungsstange befestigt, welche durch den einzelnen Bohrantrieb hindurchragt, wobei die Verlängerungsstange zur Drehmomentübertragung von dem Bohrantrieb auf das Bohrwerkzeug ausgebildet ist.

Weitere Doppelkopf-Bohrvorrichtungen gehen aus der DE 10 2015 001 720 A1 und der DE 10 2001 012 055 A1 hervor.

Aus der EP 2 236 734 B1 ist eine Antriebseinheit zum Doppelkopfbohren zu entnehmen, wobei mittels einer Justiereinrichtung eine Winkellage zwischen einem Außenrohr und einem Innenrohr des Bohrgestänges einstellbar ist.

Beim Doppelkopfbohren ist in bestimmten Fällen eine axiale Relativverstellung des Innengestänges gegenüber einem Außenrohr vorteilhaft. So kann es zweckmäßig sein, dass, etwa bei sandigen oder instabilen Böden, das Außenrohr zur Abstützung des Bohrlochs dem Innengestänge mit dem inneren Bohrwerkzeug voreilt. In anderen Fällen kann es wiederum sinnvoll sein, dass zunächst das Innengestänge mit dem inneren Bohrwerkzeug dem äußeren Bohrrohr voreilt. Insbesondere bei einem schichtweise aufgebauten Boden kann es notwendig sein, ein Bohrloch in einem oberen Bereich durch ein Bohrrohr abzustützen, während in tieferen stabileren Bodenschichten ein Abbohren allein mittels des Innengestänges mit einem inneren Bohrwerkzeug ausreichend sein kann.

Der Erfindung liegt die **Aufgabe** zugrunde, eine Doppelkopf-Bohrvorrichtung und ein Bohrverfahren hierzu anzugeben, mit welchen eine besonders hohe Einsatzvielfalt beim Doppelkopfbohren erreichbar ist.

Nach der Erfindung wird die Aufgabe durch eine Doppelkopf-Bohrvorrichtung mit den Merkmalen des Anspruchs 1 beziehungsweise ein Verfahren zum Erstellen einer Bohrung mit den Merkmalen des Anspruchs 10 gelöst.

Bevorzugte Ausführungen der Erfindung sind in den jeweils abhängigen Ansprüchen angegeben.

Die erfindungsgemäße Doppelkopf-Bohrvorrichtung ist dadurch gekennzeichnet, dass zum lösbaren Spannen des Innengestänges ein erster Spannkopf und ein zweiter Spannkopf vorgesehen sind und dass die beiden Spannköpfe axial zueinander verschiebbar gelagert sind.

Eine Grundidee der Erfindung kann darin gesehen werden, bei einer DoppelkopfBohrvorrichtung ein lösbares Spannen des Innengestänges vorzusehen. Hierzu sind ein erster Spannkopf und ein zweiter Spannkopf vorgesehen, welche axial verschiebbar zueinander gelagert sind. Mit dem mindestens einen axial verschiebbar gelagerten Spannkopf kann so ein axiales Verschieben erfolgen, wobei dies aufgrund der Anordnung von zwei Spannköpfen wiederholt oder schrittweise durchgeführt werden kann. Auf diese Weise kann auch bei einem begrenzten Bauraum an der Doppelkopf-Bohrvorrichtung ein nahezu beliebiges axiales Verstellen des Innengestänges gegenüber dem Außenrohr erfolgen. Insbesondere kann ein Innengestänge verwendet werden, welches durch die beiden ringförmigen Antriebseinheiten hindurchragt und bis zu mehreren Metern nach hinten aus der Antriebsanordnung vorsteht. Grundsätzlich ist es sogar möglich, am Ende des Innengestänges zusätzliche Verlängerungen anzubringen, so dass bei der erfindungsgemäßen DoppelkopfBohrvorrichtung ein nahezu beliebiges axiales Verfahren des Innengestänges mit dem daran angebrachten Innenbohrwerkzeug relativ zum Außenrohr, welches üblicherweise ein Bohrrohr ist, verfahren werden kann.

Eine bevorzugte Ausführungsform der Erfindung besteht darin, dass die beiden Spannköpfe unabhängig voneinander zum wechselnden Spannen des Innengestänges betätigbar sind. Durch eine wechselweise Betätigung wird stets sichergestellt, dass das Innengestänge axial fixiert ist. Es kann so zu keinem Durchrutschen des Innengestänges beim Einbringen oder Herausziehen des Innengestänges aus einem vertikalen oder schrägstehenden Bohrloch kommen. Insbesondere wird das Innengestänge durch den ersten Spannkopf dann gespannt, wenn der zweite Spannkopf eine Endposition erreicht hat und wieder in die Ausgangsposition rückgestellt wird.

Nach einer Weiterbildung der Erfindung ist es vorteilhaft, dass der erste Spannkopf fest an der ersten Antriebseinheit angeordnet ist und dass der zweite Spannkopf axial verschiebbar gegenüber der ersten Antriebseinheit gelagert ist. Der erste Spannkopf kann dabei eine drehmomentübertragende Verbindung zwischen der ersten Antriebseinheit und dem Innengestänge darstellen. Die Antriebseinheit kann vorzugsweise einen Hydraulikantrieb mit einem zugehörigen Getriebe umfassen. Bei einem drehenden Antrieb des Innengestänges ist der erste Spannkopf drehfest mit dem Innengestänge verbunden, während der zweite Spannkopf vom Innengestänge gelöst ist. Für einen Verschiebebetrieb hingegen ist der erste Spannkopf vom Innengestänge gelöst, während der zweite Spannkopf kraftschlüssig mit dem Innengestänge verbunden ist und so der zweite Spannkopf zusammen mit dem Innengestänge axial verschoben werden kann.

Dabei ist es nach einer Weiterbildung der Erfindung besonders zweckmäßig, dass zum Verschieben des zweiten Spannkopfes mindestens ein Verschiebezylinder vorgesehen ist. Vorzugsweise sind zwei oder mehr Zylinder vorgesehen. Die Zylinder sind insbesondere hydraulisch betätigbar.

Eine weitere bevorzugte Ausführungsform der Erfindung besteht darin, dass mindestens eine Linearführung vorgesehen ist, entlang welcher der zweite Spannkopf geführt ist. Die Linearführung kann sich von der hinteren ersten Antriebseinheit nach hinten parallel zur Achse des Innengestänges erstrecken. Die Linearführung dient zum Halten und/oder als eine Verdrehsicherung des zweiten verschiebbaren Spannkopfes.

Besonders vorteilhaft ist es nach einer Ausführungsvariante der Erfindung, dass der erste Spannkopf ausgebildet ist, im gespannten Zustand das Innengestänge axial fest und drehbar zur Drehmomentübertragung eines Drehmoments von der ersten Antriebseinheit zu halten. Der erste Spannkopf wird für die Drehmomentübertragung mit dem Innengestänge gespannt. In diesem Zustand kann dann der zweite Spannkopf von dem Innengestänge gelöst werden.

Dabei ist es weiterhin vorteilhaft, dass der zweite Spannkopf ausgebildet ist, im gespannten Zustand das Innengestänge axial fest und drehfest zu halten. Wenn der zweite Spannkopf mit dem Innengestänge gespannt ist, kann keine Drehmomentübertragung erfolgen. Für ein Verschieben des zweiten Spannkopfes mit dem gespannten Innengestänge wird der erste Spannkopf vom Innengestänge gelöst, so dass dann der zweite Spannkopf vorzugsweise mit dem Verschiebezylinder axial verfahren wird.

Grundsätzlich kann der Spannkopf in jeder geeigneten Weise ausgebildet sein, um eine kraft- und/oder formschlüssige Verbindung mit dem Innengestänge herzustellen. Besonders zweckmäßig ist es nach einer Ausführungsvariante der Erfindung, dass der erste Spannkopf und/oder der zweite Spannkopf mindestens einen Spannzylinder zum kraftschlüssigen Spannen des Innengestänges aufweist. Der Spann- oder Klemmzylinder ist insbesondere quer zum Innengestänge gerichtet oder weist Klemmkeile oder einen Klemmkonus auf. Vorzugsweise können auch zwei oder mehr Spannzylinder an einem Spannkopf angeordnet sein.

Nach einer Weiterbildung der Erfindung ist es besonders vorteilhaft, dass der zweite Spannkopf ringförmig mit einer Durchtrittsöffnung für das Innengestänge ausgebildet ist, wobei das Innengestänge mittels des zweiten Spannkopfs vorzugsweise in die erste Antriebseinheit einfahrbar oder aus der zweiten Antriebseinheit ausfahrbar ist. Das Innengestänge kann so durch den ringförmigen zweiten Spannkopf nach hinten bis zu 8 m oder mehr herausragen. Insbesondere bei einem vorauseilenden Bohrwerkzeug an dem Innengestänge, etwa einer Bohrschnecke, kann so das Bohrwerkzeug mit bis zu mehreren Metern dem Außengestänge voreilen. Das durch die Spannköpfe hindurchragende Innengestänge ist vorzugsweise als ein sogenanntes Kellygestänge ausgebildet, welches an der Außenseite zur Drehmomentübertragung Mitnehmerleisten aufweist. Diese Mitnehmerleisten können zur Drehmomentübertragung mit entsprechenden Leisten an den ringförmigen Antriebseinheiten in Wirkverbindung treten.

Die Doppelkopf-Bohrvorrichtung nach der Erfindung kann nicht nur zum Doppelkopfbohren sondern auch für andere Bohrverfahren, etwa zu einem Überlagerungsbohren eingesetzt werden.

Die Erfindung umfasst weiterhin ein Bohrgerät mit einem Trägerfahrzeug und einem Mast oder einer Lafette, entlang welchem eine Doppelkopf-Bohrvorrichtung verschiebbar geführt ist, welche gemäß der Erfindung, wie zuvor beschrieben, ausgeführt ist. Das Bohrgerät kann insbesondere zum Herstellen von Bohrpfählen im Boden eingesetzt werden. Dabei weist das Trägerfahrzeug eines Bohrgerätes üblicherweise einen im Wesentlichen vertikal gerichteten Mast auf, entlang welchem die Doppelkopf-Bohrvorrichtung vertikal verschiebbar geführt ist. Weiterhin kann die erfindungsgemäße Doppelkopf-Bohrvorrichtung auch an einer im Raum verstellbaren Lafette eingesetzt werden, wie sie etwa bei sogenannten Ankerbohrgeräten Verwendung findet.

Weiterhin umfasst die Erfindung ein Verfahren zum Erstellen einer Bohrung, bei dem ein Bohrgestänge mit einem Außenrohr und einem zumindest abschnittsweise innerhalb des Außenrohres verlaufenden Innengestänge mittels einer Doppelkopf-Bohrvorrichtung in Rotation versetzt und axial verfahren wird, wie diese zuvor beschrieben wurde. Mit diesem erfindungsgemäßen Verfahren können die zuvor beschriebenen Vorteile erzielt werden.

Eine bevorzugte Ausführungsform des erfindungsgemäßen Verfahrens besteht darin, dass zum Verschieben des Innengestänges dieses von dem zweiten Spannkopf gespannt wird, der erste Spannkopf von dem Innengestänge gelöst wird und der zweite Spannkopf mit dem gespannten Innengestänge axial verschoben wird. Auf diese Weise ist ein sicheres und schrittweises Verschieben des Innengestänges mit dem zweiten Spannkopf möglich, wobei der erste Spannkopf eine Durchfallsicherung darstellt, wenn der zweite Spannkopf vom Innengestänge wieder gelöst wird, um für einen weiteren Verschiebeschritt von einer Endposition zu einer Ausgangsposition zurückzukehren.

Für ein drehendes Antreiben des Innengestänges wird dieses mit dem ersten Spannkopf gespannt. Nach dem Spannen des ersten Spannkopfes wird der zweite Spannkopf von dem Innengestänge gelöst. Sodann kann über die erste Antriebseinheit ein Drehmoment über eine separate Drehmomentantriebseinrichtung oder über den Spannkopf direkt auf das Innengestänge erfolgen.

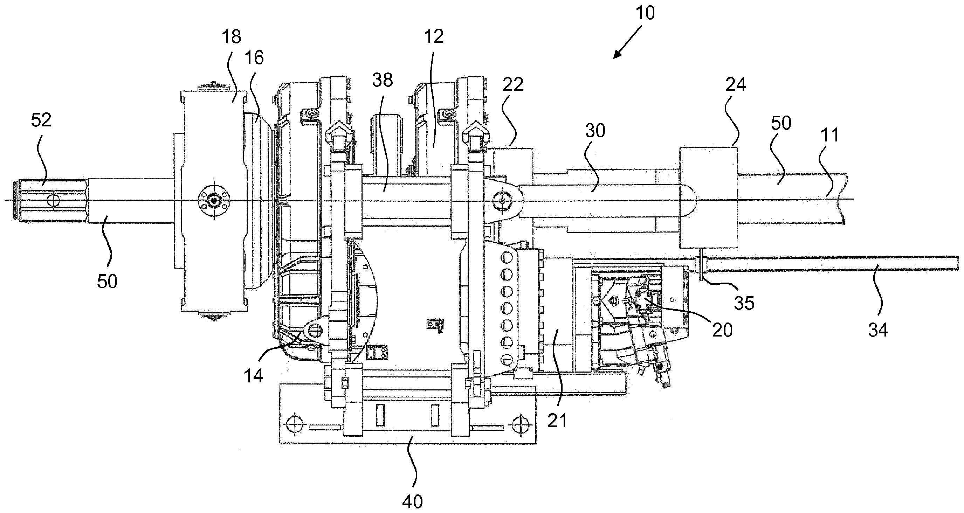

Die Erfindung wird nachfolgend anhand eines bevorzugten Ausführungsbeispiels weiter erläutert, welches schematisch in der Zeichnung dargestellt ist.

Die einzige Figur zeigt eine Seitenansicht einer erfindungsgemäßen DoppelkopfBohrvorrichtung 10. Diese weist einen Schlitten 40 auf, mit welchem die DoppelkopfBohrvorrichtung 10 entlang eines Mastes eines nicht dargestellten Bohrgerätes linear verfahren werden kann. Die erfindungsgemäße Doppelkopf-Bohrvorrichtung umfasst eine erste Antriebseinheit 12 und eine zweite Antriebseinheit 14. Die zweite Antriebseinheit 14 ist mit einem ringförmigen Antriebsflansch 16 ausgebildet, an welchem ein kardanisches Pendelgelenk 18 angebracht ist. An dem Pendelgelenk 18 wird ein aus Übersichtlichkeitsgründen nicht dargestelltes Außenrohr, auch Bohrrohr genannt, befestigt. Mittels der zweiten Antriebseinheit 14 kann das nicht dargestellte Außenrohr zum Abbohren in dem Boden drehend angetrieben werden.

Die erste Antriebseinheit 12 ist zum Antreiben eines zylindrischen Innengestänges 50 ausgebildet. Das Innengestänge 50 ragt durch die Doppelkopf-Bohrvorrichtung 10 mit den ringförmigen Antriebseinheiten 12, 14 hindurch. Am dargestellten vorderen Ende des Innengestänges 50 ist ein Mehrkant-Verbindungsstück 52 angeordnet, an welchem ein Bohrwerkzeug, etwa eine Bohrschnecke oder ein Kastenbohrer, lösbar befestigt werden kann. Das Innengestänge 50 kann rohrförmig mit einem inneren Kanal ausgebildet sein, um hierdurch beispielsweise Beton oder eine andere aushärtende Masse in ein erstelltes Bohrloch einzuführen.

Die beiden Antriebseinheiten 12, 14 weisen ringförmige Antriebsräder zur Drehmomentübertragung auf das Innengestänge 50 beziehungsweise das Außenrohr auf. Das Drehmoment wird über rückwärtig angeordnete Hydraulikmotoren 20 erzeugt, welche das Drehmoment über eine Getriebeeinrichtung 21 zu den Antriebsrädern der beiden Antriebseinheiten 12, 14 übertragen. Die beiden Antriebseinheiten 12, 14 sind über mindestens eine Verbindungsstrebe 38 fest miteinander verbunden. Alternativ können die beiden Antriebseinheiten 12, 14 auch über axiale Stellzylinder axial zueinander verfahrbar sein.

Für ein axiales Verfahren des Innengestänges 50 gegenüber dem Außenrohr ist am hinteren Ende der ersten Antriebseinheit 12 ein ringförmiger erster Spannkopf 22 angeordnet. Im gespannten Zustand kann der erste Spannkopf 22 das Innengestänge 50 axial fest aber drehbar um eine Bohrachse 11 halten. Weiterhin ist axial beabstandet hierzu ein zweiter Spannkopf 24 angeordnet, welcher das Innengestänge 50 axial fest und drehfest spannen kann. Der zweite Spannkopf 24 kann vorzugsweise ringförmig oder anders gestaltet sein.

Bei einem gespannten zweiten Spannkopf 24 und einem gelösten ersten Spannkopf 22 kann der zweite Spannkopf 24 zusammen mit dem gespannten Innengestänge 50 mittels eines Verschiebezylinders 30 axial zwischen einer Ausgangsposition und einer Endposition verschoben werden. Dabei ist der zweite Spannkopf 24 entlang einer stabförmigen Linearführung 34 über einen Führungsschuh 35 drehfest geführt.

So kann mit dem zweiten Spannkopf 24 das Innengestänge 50 entsprechend dem Hub des Verschiebezylinders 30 axial verschoben werden. Anschließend kann der zweite Spannkopf 24 wieder gelöst und in die Ausgangsposition rückgefahren werden. Während dieses Rückfahrvorgangs kann das Innengestänge 50 durch den ersten Spannkopf 22 gespannt und in der Lage fixiert sein. Anschließend kann ein erneutes Spannen durch den zweiten Spannkopf 24 erfolgen, wobei dann der erste Spannkopf 22 wieder vom Innengestänge 50 gelöst wird. Nunmehr kann erneut ein Verschiebeschritt durch den zweiten Spannkopf 24 mit dem Verschiebezylinder 30 erfolgen.

Auf diese Weise kann ein nahezu beliebig langes Innengestänge 50, welches die beiden Antriebseinheiten 12, 14 und die beiden Spannköpfe 22, 24 durchragt, beim Doppelkopfbohren eingesetzt werden. Durch ein mehrfaches schrittweises Verschieben des Innengestänges 50 gegenüber dem Außenrohr kann ein Bohrwerkzeug mit einer nahezu beliebigen Länge gegenüber dem unteren Ende des Außenrohres voreilen.

## Patentansprüche

1. Doppelkopf-Bohrvorrichtung umfassend ein Bohrgestänge mit einem Außenrohr und einem zumindest abschnittsweise innerhalb des Außenrohres verlaufenden Innengestänge (50), mit
- einer ersten Antriebseinheit (12) zum drehenden Antreiben des Innengestänges (50) und
- einer zweiten Antriebseinheit (14) zum drehenden Antreiben des Außenrohres,
**dadurch gekennzeichnet,**
- **dass** zum lösbaren Spannen des Innengestänges (50) ein erster Spannkopf (22) und ein zweiter Spannkopf (24) vorgesehen sind,
- **dass** die beiden Spannköpfe (22, 24) axial zueinander verschiebbar gelagert sind,
- **dass** der erste Spannkopf (22) fest an der ersten Antriebseinheit (12) angeordnet ist und
- **dass** der zweite Spannkopf (24) axial verschiebbar gegenüber der ersten Antriebseinheit (12) gelagert ist.

2. Doppelkopf-Bohrvorrichtung nach Anspruch 1,
**dadurch gekennzeichnet,**
**dass** die beiden Spannköpfe (22, 24) unabhängig voneinander zum wechselnden Spannen des Innengestänges (50) betätigbar sind.

3. Doppelkopf-Bohrvorrichtung nach einem der Ansprüche 1 bis 2,
**dadurch gekennzeichnet,**
**dass** zum Verschieben des zweiten Spannkopfes (24) mindestens ein Verschiebezylinder (30) vorgesehen ist.

4. Doppelkopf-Bohrvorrichtung nach einem der Ansprüche 1 bis 3,
**dadurch gekennzeichnet,**
**dass** mindestens eine Linearführung (34) vorgesehen ist, entlang welcher der zweite Spannkopf (24) geführt ist.

5. Doppelkopf-Bohrvorrichtung nach einem der Ansprüche 1 bis 4,
**dadurch gekennzeichnet,**
**dass** der erste Spannkopf (22) ausgebildet ist, im gespannten Zustand das Innengestänge (50) axial fest und drehbar zur Drehmomentübertragung eines Drehmoments von der ersten Antriebseinheit (12) zu halten.

6. Doppelkopf-Bohrvorrichtung nach einem der Ansprüche 1 bis 5,
**dadurch gekennzeichnet,**
**dass** der zweite Spannkopf (24) ausgebildet ist, im gespannten Zustand das Innengestänge (50) axial fest und drehfest zu halten.

7. Doppelkopf-Bohrvorrichtung nach einem der Ansprüche 1 bis 6,
**dadurch gekennzeichnet,**
**dass** der erste Spannkopf (22) und/oder der zweite Spannkopf (24) mindestens einen Spannzylinder zum kraftschlüssigen Spannen des Innengestänges (50) aufweist.

8. Doppelkopf-Bohrvorrichtung nach einem der Ansprüche 1 bis 7,
**dadurch gekennzeichnet,**
**dass** der zweite Spannkopf (24) ringförmig mit einer Durchtrittsöffnung für das Innengestänge (50) ausgebildet ist, wobei das Innengestänge (50) mittels des zweiten Spannkopfs (24) schrittweise in die erste Antriebseinheit (12) einfahrbar oder aus der zweiten Antriebseinheit (14) ausfahrbar ist.

9. Bohrgerät mit
einem Trägerfahrzeug und einem Mast oder einer Lafette, entlang welcher eine Doppelkopf-Bohrvorrichtung (10) verschiebbar geführt ist,
**dadurch gekennzeichnet,**
**dass** eine Doppelkopf-Bohrvorrichtung (10) nach einem der Ansprüche 1 bis 8 vorgesehen ist.

10. Verfahren zum Erstellen einer Bohrung, bei dem ein Bohrgestänge mit einem Außenrohr und einem zumindest abschnittsweise innerhalb des Außenrohres verlaufenden Innengestänge (50) mittels einer Doppelkopf-Bohrvorrichtung (10) nach einem der Ansprüche 1 bis 8 in Rotation versetzt und axial verfahren wird.

11. Verfahren nach Anspruch 10,
**dadurch gekennzeichnet,**
**dass** zum Verschieben des Innengestänges (50) dieses von dem zweiten Spannkopf (24) gespannt wird,
der erste Spannkopf (22) von dem Innengestänge (50) gelöst wird und
der zweite Spannkopf (24) mit dem gespannten Innengestänge (50) axial verschoben wird.

## Claims

1. Double head drilling device comprising a drill rod having an outer pipe and an inner rod (50) running at least in sections inside the outer pipe, with
- a first drive unit (12) for driving the inner rod (50) in a rotating manner and
- a second drive unit (14) for driving the outer pipe in a rotating manner,
**characterized in that**
- for the releasable clamping of the inner rod (50) a first clamping head (22) and a second clamping head (24) are provided,
- **in that** the two clamping heads (22, 24) are supported in an axially displaceable manner with respect to each other.
- **in that** the first clamping head (22) is firmly arranged on the first drive unit (12) and
- **in that** the second clamping head (24) is supported in an axially displaceable manner with respect to the first drive unit (12).

2. Double head drilling device according to claim 1,
**characterized in that**
the two clamping heads (22, 24) can be actuated independently of each other for alternately clamping the inner rod (50).

3. Double head drilling device according to any one of claims 1 to 2,
**characterized in that**
for displacement of the second clamping head (24) at least one displacement cylinder (30) is provided.

4. Double head drilling device according to any one of claims 1 to 3,
**characterized in that**
at least one linear guide (34) is provided, along which the second clamping head (24) is guided.

5. Double head drilling device according to any one of claims 1 to 4,
**characterized in that**
in the clamped state the first clamping head (22) is designed to hold the inner rod (50) in an axially fixed and rotatable manner for the torque transmission of a torque from the first drive unit (12).

6. Double head drilling device according to any one of claims 1 to 5,
**characterized in that**
in the clamped state the second clamping head (24) is designed to hold the inner rod (50) in an axially fixed and torque-proof manner.

7. Double head drilling device according to any one of claims 1 to 6,
**characterized in that**
the first clamping head (22) and/or the second clamping head (24) has at least one clamping cylinder for the force-locked clamping of the inner rod (50).

8. Double head drilling device according to any one of claims 1 to 7,
**characterized in that**
the second clamping head (24) is of annular design with a passage opening for the inner rod (50), wherein by means of the second clamping head (24) the inner rod (50) can be moved stepwise into the first drive unit (12) or moved out of the second drive unit (14).

9. Drilling apparatus having
a carrier vehicle and a mast or a mounting, along which a double head drilling device (10) is guided in a displaceable manner,
**characterized in that**
a double head drilling device (10) according to any one of claims 1 to 8 is provided.

10. Method for producing a bore, in which a drill rod having an outer pipe and an inner rod (50) running at least in sections inside the outer pipe is set into rotation and moved axially by means of a double head drilling device (10) according to any one of claims 1 to 9.

11. Method according to claim 10,
**characterized in that**
for displacement of the inner rod (50) this is clamped by the second clamping head (24),
the first clamping head (22) is released from the inner rod (50) and
the second clamping head (24) with the clamped inner rod (50) is displaced axially.

## Revendications

1. Dispositif de forage double tête comprenant une tige de forage avec un tube extérieur et une tige intérieure (50) courant au moins sur une section à l'intérieur du tube extérieur, avec
- une première unité d'entraînement (12) pour entraîner en rotation la tige intérieure (50) et
- une deuxième unité d'entraînement (14) pour entraîner en rotation le tube extérieur,
**caractérisé en ce**
- **qu'**une première tête de serrage (22) et une deuxième tête de serrage (24) sont prévues pour serrer de façon libérable la tige intérieure (50),
- **que** les deux têtes de serrage (22, 24) sont montées de façon à coulisser axialement entre elles,
- **que** la première tête de serrage (22) est fixée sur la première unité d'entraînement (12) et
- **que** la deuxième tête de serrage (24) est montée de façon à coulisser axialement par rapport à la première unité d'entraînement (12).

2. Dispositif de forage double tête selon la revendication 1,
**caractérisé en ce**
**que** les deux têtes de serrage (22, 24) peuvent être actionnées indépendamment l'une de l'autre pour serrer en alternance la tige intérieure (50).

3. Dispositif de forage double tête selon une des revendications 1 à 2,
**caractérisé en ce**
**qu'**au moins un vérin de coulissement (30) est prévu pour le coulissement de la deuxième tête de serrage (24).

4. Dispositif de forage double tête selon une des revendications 1 à 3,
**caractérisé en ce**
**qu'**il est prévu au moins un guide linéaire (34) le long duquel la deuxième tête de serrage (24) est guidée.

5. Dispositif de forage double tête selon une des revendications 1 à 4,
**caractérisé en ce**
**que** la première tête de serrage (22) est conçue pour tenir fermement, lorsqu'elle est serrée, la tige intérieure (50) dans le sens axial et la faire tourner pour la transmission de couple de rotation d'un couple de rotation de la première unité d'entraînement (12).

6. Dispositif de forage double tête selon une des revendications 1 à 5,
**caractérisé en ce**
**que** la deuxième tête de serrage (24) est conçue pour tenir fermement, lorsqu'elle est serrée, la tige intérieure (50) dans le sens axial et dans le sens de rotation.

7. Dispositif de forage double tête selon une des revendications 1 à 6,
**caractérisé en ce**
**que** la première tête de serrage (22) et/ou la deuxième tête de serrage (24) présentent un vérin de serrage pour le serrage en force de la tige intérieure (50).

8. Dispositif de forage double tête selon une des revendications 1 à 7,
**caractérisé en ce**
**que** la deuxième tête de serrage (24) est configurée de façon annulaire avec une ouverture de passage pour la tige intérieure (50), la tige intérieure (50) pouvant être insérée par étapes dans la première unité d'entraînement (12) ou extraite de la deuxième unité d'entraînement (14) au moyen de la deuxième tête de serrage (24).

9. Engin de forage avec
un véhicule porteur et un mât ou un affût le long duquel un dispositif de forage double tête (10) est guidé de façon coulissante,
**caractérisé en ce**
**qu'**il est prévu un dispositif de forage double tête (10) selon une des revendications 1 à 8.

10. Procédé de réalisation d'un forage selon lequel une tige de forage est mise en rotation et déplacée axialement avec un tube extérieur et une tige intérieur (50) courant au moins sur une section à l'intérieur du tube extérieur au moyen d'un dispositif de forage double tête (10) selon une des revendications 1 à 8.

11. Procédé selon la revendication 10,
**caractérisé en ce**
**que**, pour le coulissement la tige intérieure (50), celle-ci est serrée par la deuxième tête de serrage (24),
la première tête de serrage (22) est libérée par la tige intérieure (50) et
la deuxième tête de serrage (24) est déplacée axialement avec la tige intérieure (50) serrée.
